(19) Europäisches Patentamt
European Patent Office
Office européen des brevets

(11) EP 2 458 352 A1

(12) DEMANDE DE BREVET EUROPEEN

(43) Date de publication:
30.05.2012 Bulletin 2012/22

(51) Int Cl.:
G01J 5/20 (2006.01)   G01J 5/22 (2006.01)

(21) Numéro de dépôt: 11189909.2

(22) Date de dépôt: 21.11.2011

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME

(30) Priorité: 29.11.2010  FR 1059873

(71) Demandeur: Commissariat à l'Énergie Atomique
et aux Énergies Alternatives
75015 Paris (FR)

(72) Inventeurs:
• Chammings, Gilles
38100 GRENOBLE (FR)
• Repellin, Gaëlle
38000 GRENOBLE (FR)
• Tchagaspanian, Michaël
38330 SAINT ISMIER (FR)

(74) Mandataire: Ilgart, Jean-Christophe et al
BREVALEX
95 rue d'Amsterdam
75378 Paris Cedex 8 (FR)

(54) Circuit électronique de polarisation et de lecture de détecteur thermique résistif

(57) Circuit électronique (100) de polarisation et de lecture d'au moins un détecteur thermique résistif (102), comportant :
- des moyens de polarisation aptes à polariser le détecteur thermique résistif en faisant circuler un courant de polarisation de valeur sensiblement constante dans le détecteur thermique résistif lors d'une variation de sa résistance électrique,

- des moyens de conversion aptes à convertir une tension aux bornes du détecteur thermique résistif en un courant, comportant au moins un transistor de type MOS (106) dont la grille est reliée électriquement à l'une des bornes du détecteur thermique résistif ;
- des moyens de génération d'une tension d'ébasage reliés électriquement à la source du transistor de type MOS des moyens de conversion.

FIG.2

EP 2 458 352 A1

**Description**

**DOMAINE TECHNIQUE**

L'invention concerne le domaine de la mesure de températures et de l'imagerie, tel que celui de l'imagerie infrarouge. L'invention concerne plus particulièrement celui des imageurs infrarouge non refroidis à détecteurs thermiques résistifs.

**ÉTAT DE LA TECHNIQUE ANTÉRIEURE**

Un imageur infrarouge à détecteurs thermiques résistifs tels que des bolomètres comporte une matrice de pixels comprenant chacun un détecteur thermique résistif utilisé en tant que détecteur d'un rayonnement infrarouge et qui réagit à une variation de température par une variation de sa résistance électrique. L'imageur comporte également un circuit électronique de lecture réalisant l'acquisition, le traitement et l'évaluation du signal fourni par le détecteur, c'est-à-dire la variation de sa résistance électrique.

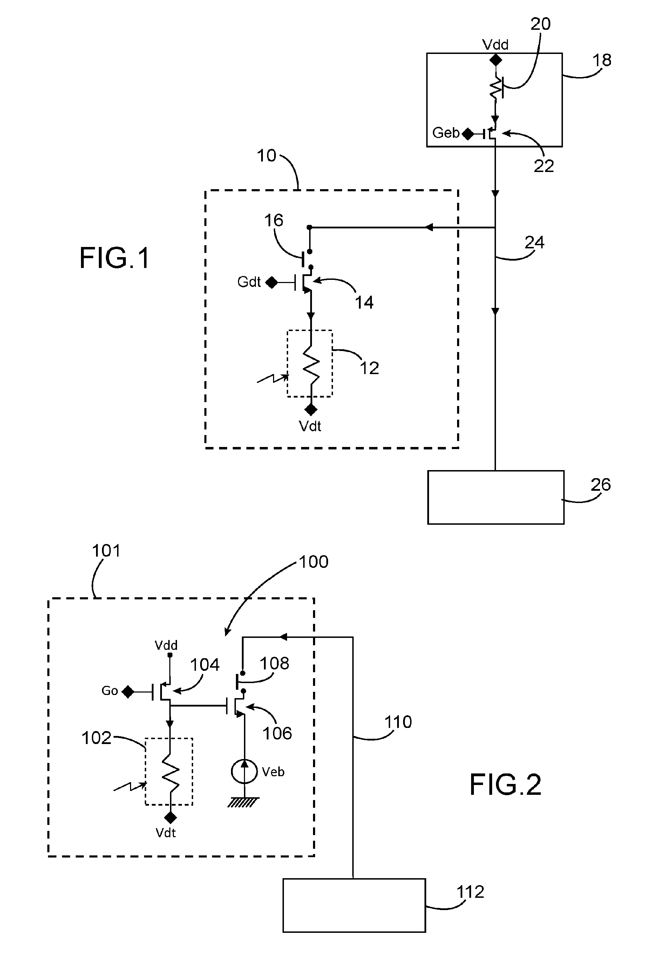

L'architecture d'un pixel 10 d'un tel imageur comportant, dans cet exemple, un bolomètre 12 et un circuit de lecture associé, est représentée sur la figure 1.

Le bolomètre 12 comprend une première borne sur laquelle est appliquée une tension de polarisation Vdt et une seconde borne reliée électriquement à la source d'un transistor NMOS 14 apte à polariser en tension le bolomètre 12. Le drain du transistor NMOS 14 est relié électriquement à un interrupteur 16 qui est fermé lorsque l'on réalise une mesure de température par le bolomètre 12.

Un circuit 18 d'ébasage de courant est disposé en tête de chaque colonne de pixels de la matrice de pixels. Chaque circuit 18 comporte un bolomètre thermalisé 20 comprenant une première borne sur laquelle est appliquée une tension d'alimentation Vdd et une seconde borne reliée électriquement à la source d'un transistor PMOS 22. Une tension de polarisation Geb est appliquée sur la grille du transistor PMOS 22. La tension Vdt peut être utilisée de paire avec la tension Gdt pour régler la polarisation du bolomètre 12. Le drain du transistor PMOS 22 est relié électriquement à un bus 24 commun à l'ensemble des pixels de la colonne et sur lequel le circuit 18 délivre un courant d'ébasage Ieb. Le pixel 10 est relié électriquement au bus 24 par l'intermédiaire de l'interrupteur 16. Enfin, le bus 24 est relié électriquement, en pied de colonne (à l'opposé du circuit 18), à un circuit 26 de traitement des courants de mesure délivrés par les pixels de la colonne.

Dans cette architecture, la polarisation en tension du bolomètre 12 est réalisée grâce au transistor NMOS 14. La tension de polarisation appliquée au bolomètre 12 est contrôlée par l'intermédiaire d'une tension Gdt appliquée sur la grille de ce transistor NMOS 14, appelé transistor d'injection ou de polarisation. La polarisation en tension du bolomètre 12 permet de définir un courant moyen Ibolo traversant le bolomètre 12. La tension Gdt est choisie de manière à ce que le point de fonctionnement du transistor d'injection 14 soit tel que ce dernier fonctionne en limite de saturation.

Lorsque le bolomètre 12 est soumis à une variation de température à mesurer, cette variation de température entraîne une variation de sa résistance électrique. Etant donné que le bolomètre 12 est polarisé en tension, cette variation de sa résistance électrique se traduit alors par une variation du courant traversant le bolomètre 12. L'information utile, c'est-à-dire la variation de température mesurée, est donc contenue dans les fluctuations de ce courant qui sont centrées autour de la valeur moyenne Ibolo définie par la polarisation en tension. C'est donc le courant bolométrique, c'est-à-dire le courant traversant le bolomètre, qui est l'image de la variation de température mesurée par le bolomètre 12 et qui constitue la grandeur traitée par le circuit de lecture associé au bolomètre.

Le circuit 18 permet de réaliser un ébasage du courant bolométrique. En effet, le courant fourni par le bolomètre 12 possède un fort mode commun autour duquel se trouvent les faibles fluctuations du signal représentant les fluctuations de température mesurées. Le circuit 18 d'ébasage est donc utilisé pour éliminer le mode commun du courant bolométrique afin de n'en conserver que la partie utile. En fermant l'interrupteur 16, le drain du transistor d'injection 14 se retrouve relié électriquement au bus 24 et au circuit 18. Le courant d'ébasage Ieb délivré par le circuit 18 s'additionne à celui délivré par le bolomètre 12 ce qui permet de supprimer le mode commun du courant fourni par le bolomètre 12 et donc d'obtenir en pied de colonne un courant ébasé correspondant uniquement à la mesure de la variation de température réalisée par le bolomètre 12, délivré au circuit de traitement 26.

Le circuit de traitement 26 réalise ensuite une intégration du courant ébasé via un montage intégrateur du circuit 26. Le résultat de cette intégration est fourni alors sous forme d'une tension contenant l'information fournie par le bolomètre. Cette tension est ensuite envoyée sur un bus qui récupère séquentiellement toutes les tensions associées à tous les capteurs (bolomètres) de la matrice de l'imageur. Cette séquence de « valeurs de pixels » est ensuite envoyée dans un amplificateur vidéo pour reconstituer et afficher l'image capturée par la matrice de pixels de l'imageur.

L'architecture du pixel 10 précédemment décrite présente toutefois des performances peu satisfaisantes, en particulier en termes de rapport signal/bruit. En effet, le signal (rayonnement infrarouge) capturé par l'imageur va nécessairement subir des dégradations (bruit) dues au bolomètre lui-même et au circuit de lecture, se traduisant par une baisse du rapport signal/bruit sur le signal obtenu au final. Ces perturbations sont sensibles notamment lorsque le bolomètre est à faible résistance moyenne. Dans ce cas, la dégradation causée par l'électronique de lecture est plus importante que celle causée par le bolomètre lui-même. C'est donc dans ce cas le circuit de lecture électronique qui limite les performances du pixel.

On observe, en effet, que la diminution de la résistance bolométrique moyenne entraîne une dégradation du rendement d'injection du transistor d'injection 14, qui est égal à :

$$\frac{gm.R_{bolo}}{1 + gm.R_{bolo}},$$

avec
gm : transconductance du transistor d'injection 14 ;
$R_{bolo}$ : Résistance du bolomètre 12.

Cette dégradation se traduit par une mauvaise transmission par le transistor d'injection 14 du courant de mesure fourni par le bolomètre 12.

De plus, si $R_{bolo}$ diminue, alors le bruit en courant causé par le bolomètre $I_{bruit\_bolo}$ diminue également.

Or, $I_{bruit-bolo}^2 = I_1/f^2 + I{thermique}^2 \cdot$ Lorsque $R_{bolo}$ diminue, le bruit en 1/f diminue plus que le bruit thermique n'augmente. Le bolomètre 12 est donc moins bruyant.

D'autre part, si $I_{bolo}$ augmente, alors le bruit en courant causé par le transistor d'injection 14 augmente. Le bruit d'un transistor est constitué de deux composantes : le bruit thermique (bruit blanc) et le bruit en 1/f. Il s'exprime en fonction des grandeurs suivantes : $1/R_{bolo}$, $I_{ds}$, W/L et W.L, avec
Ids : courant drain-source du transistor ;
W : largeur du transistor ;
L : Longueur de grille du transistor.

Le transistor d'injection 14 devient donc plus bruyant.

Au final, le bruit du circuit de lecture devient prédominant par rapport au bruit du bolomètre. Par conséquent, le rapport signal/bruit du pixel diminue, la résolution de l'imageur est moins bonne et l'image capturée se dégrade.

Pour remédier à cela, on cherche donc à rehausser les performances de l'électronique du circuit de lecture du bolomètre. L'objectif principal est donc de réduire le bruit apporté par le circuit de lecture dans le but d'améliorer le rapport signal/bruit du pixel.

Les solutions proposées pour réduire le bruit d'un transistor MOS consistent essentiellement à utiliser une technologie SOI ou/et à jouer sur sa taille. En effet, en augmentant la taille d'un transistor, celui-ci devient moins bruyant. La tendance est donc d'augmenter sa largeur W et sa longueur de grille L.

Cependant, agir sur les dimensions des composants s'avère délicat, en particulier dans le domaine de l'imagerie. En effet, l'imageur est constitué d'une matrice de pixels : tous les composants situés dans le pixel ont des dimensions contraintes par la taille du pixel. Certains composants (circuit 18 et circuit 26 sur l'exemple de la figure 1), qui sont communs à plusieurs pixels, peuvent néanmoins être placés en dehors des pixels, en pied et/ou tête de colonne et/ou de ligne : il n'y a alors plus aucune contrainte sur leur taille. Cependant, cela ne s'applique pas pour les composants dont on cherche à réduire le bruit et qui sont disposés à proximité du bolomètre. Ces composants se trouvent dans le pixel et la manipulation de leurs dimensions se trouve donc limitée.

Bien que délicat, il est possible, dans une certaine mesure, d'augmenter les dimensions de ces transistors pour réduire leur bruit. Néanmoins, lorsque la taille des composants dépasse celle d'un pixel, il devient alors nécessaire de modifier l'architecture globale des pixels en réalisant un partage des composants entre deux pixels adjacents. Or, ce partage de composants entre pixels implique des contraintes sur l'utilisation de l'imageur. Il n'est, par exemple, plus possible d'utiliser le mode « Rolling Shutter » qui est un mode de balayage de la matrice de pixels dans lequel plusieurs lignes consécutives subissent une acquisition simultanée, et qui nécessite donc que chaque pixel ait sa propre électronique de lecture, c'est-à-dire non partagée avec d'autres pixels de la matrice.

## EXPOSÉ DE L'INVENTION

Un but de la présente invention est de proposer un nouveau circuit électronique de polarisation et de lecture d'au moins un détecteur thermique résistif tel qu'un bolomètre, formant une nouvelle architecture de pixel d'un dispositif imageur, améliorant le rapport signal/bruit du signal capturé sans augmenter les tailles des composants électroniques, et notamment des transistors, des pixels.

Pour cela, il est proposé un circuit électronique de polarisation et de lecture d'au moins un détecteur thermique résistif (par exemple un bolomètre), comportant :

- des moyens de polarisation aptes à polariser le détecteur thermique résistif en faisant circuler un courant de polarisation de valeur sensiblement constante dans le détecteur thermique résistif lors d'une variation de sa résistance électrique ;
- des moyens de conversion aptes à convertir une tension aux bornes du détecteur thermique résistif en un courant.

Il est également proposé un circuit électronique de polarisation et de lecture d'au moins un détecteur thermique résistif, comportant :

- des moyens de polarisation aptes à polariser le détecteur thermique résistif en faisant circuler un courant de polarisation de valeur sensiblement constante dans le détecteur thermique résistif lors d'une variation de sa résistance électrique ;
- des moyens de conversion aptes à convertir une tension aux bornes du détecteur thermique résistif en un courant, comportant au moins un transistor de type MOS, pouvant être appelé second transistor, dont la grille est reliée électriquement à l'une des bornes du détecteur thermique résistif ;
- des moyens de génération d'une tension d'ébasage reliés électriquement à la source du transistor de type MOS des moyens de conversion.

Un tel circuit électronique de polarisation et de lecture peut être utilisé pour n'importe quel type de détecteur thermique résistif, par exemple un bolomètre ou un microbolomètre ou toute autre résistance variable avec la température.

Ce nouveau circuit électronique réalise une polarisation du détecteur par un courant continu, ce qui permet de traduire les variations de température mesurées par le détecteur en variations de tension à ses bornes. Ces variations de tension sont ensuite converties en courant par les moyens de conversion, par exemple à l'aide de la transconductance d'un transistor MOS monté en « source commune ». Ainsi, comme dans les circuits de lecture de l'art antérieur, le courant reste donc la grandeur image des variations de température mesurées. Toutefois, dans l'invention, ce courant est obtenu en deux étapes de conversion. : variation de résistance convertie en variation de tension, puis convertie en variation de courant.

Ce circuit électronique de polarisation et de lecture met en oeuvre une polarisation en courant du détecteur totalement indépendante de la mesure du détecteur, ce qui permet de dissocier les contraintes sur les moyens de polarisation du détecteur et les contraintes sur les moyens de mesure. Ainsi, ce circuit électronique de polarisation et de lecture permet de fournir au détecteur un courant de polarisation d'intensité nécessaire pour qu'il fonctionne de manière optimale d'un point de vue rapport signal à bruit, tout en utilisant un courant assez faible dans les moyens de mesure pour que ces moyens soient moins bruyants que dans les circuits de l'art antérieur.

Par ailleurs, ce circuit électronique de polarisation et de lecture est adapté pour réaliser un nouveau type d'ébasage du mode commun de la grandeur à lire. La valeur moyenne du courant de mesure n'est plus imposée par le détecteur mais uniquement par les moyens de mesure. Ainsi, un ébasage en courant peut être partiellement réalisé par exemple par le simple contrôle de la tension de l'une des bornes d'un transistor MOS de ces moyens de mesure. Il n'est donc plus nécessaire de faire appel à la structure d'ébasage de l'art antérieur (circuit 18 représenté sur la figure 1) située en tête de colonne.

L'architecture de ce nouveau circuit électronique de polarisation et de lecture permet de lire l'information du détecteur thermique résistif, de réaliser l'ébasage du signal, et présente l'avantage de réduire le bruit de l'électronique de lecture du détecteur, le tout sans complexifier l'architecture globale du pixel, sans nécessiter un redimensionnement des composants électroniques et sans nécessiter une modification de l'architecture globale matricielle des pixels.

Ce nouveau circuit électronique de polarisation et de lecture permet également de diminuer le bruit de l'électronique du pixel :

- sans altérer la mesure sur le courant du détecteur, ou courant bolométrique,
- en conservant les caractéristiques (courant traversant le détecteur et tension aux bornes du détecteur) permettant un fonctionnement optimal du détecteur,
- sans remettre en question l'architecture globale matricielle de l'imageur.

Le bruit de l'électronique qui était, dans les circuits de l'art antérieur, prédominant par rapport au bruit du détecteur se voit donc relativement réduit. Le rapport signal/bruit de la mesure réalisée est amélioré, améliorant la qualité et la résolution de l'image obtenue.

Ce circuit réduit également les non-linéarités par rapport aux circuits de l'art antérieur.

Par rapport aux circuits de l'art antérieur, le nouveau circuit électronique de polarisation et de lecture ne comporte pas de matériel ajouté. Par exemple, le nombre de transistors MOS pouvant former les moyens de polarisation et les moyens de lecture peuvent être identiques à ceux des circuits de polarisation et de lecture de l'art antérieur.

De plus, la structure de ce circuit électronique de polarisation et de lecture ne nécessite pas de réaliser un partage des composants électroniques entre plusieurs pixels. Ainsi, un imageur comportant de tels circuits électroniques peut réaliser un balayage de la matrice de pixels selon le mode « Rolling Shutter », ce qui n'est pas réalisable dans le cas d'un partage des composants électroniques entre plusieurs pixels.

Les moyens de polarisation peuvent comporter au moins un premier transistor de type MOS dont la source ou le drain est relié électriquement à l'une des bornes du détecteur thermique résistif.

Les moyens de conversion peuvent comporter au moins un second transistor de type MOS dont la grille peut être reliée électriquement à ladite une des bornes du détecteur thermique résistif. Ainsi, la conversion de la tension aux bornes du détecteur en un courant de mesure peut être réalisée via la transconductance du second transistor de type MOS. De plus, l'utilisation d'un transistor MOS sur la branche de mesure du circuit permet de bénéficier d'une tension flottante sur cette branche (tension de drain du transistor MOS en saturation), d'isoler les pixels entre eux d'un point de vue tension et donc d'éviter de perturber un pixel durant la lecture d'un autre pixel de la matrice. On garde donc l'avantage d'un pixel ayant une grande impédance de sortie car on réduit le bruit du pixel ainsi que la contribution de l'amplitude en améliorant la réjection du bruit propre de l'amplificateur. On améliore donc le rapport signal / bruit total.

Le circuit selon l'invention permet également de rendre indépendant le courant de polarisation par rapport au courant de lecture obtenu, ce qui autorise d'avoir un courant de mesure faible et donc d'améliorer le rapport signal/bruit du circuit.

Le premier transistor de type MOS peut être un transistor NMOS et le second transistor de type MOS peut être un transistor PMOS. Dans une variante, le premier transistor de type MOS peut être un transistor PMOS et le second transistor de type MOS peut être un transistor NMOS.

Dans une autre variante, le premier et le second transistor de type MOS peuvent être des transistors du même type, PMOS ou NMOS.

Le circuit électronique peut comporter en outre des moyens de génération d'une tension d'ébasage reliés électriquement à la source du second transistor de type MOS.

Le circuit électronique peut comporter en outre au moins un interrupteur relié électriquement au second transistor de type MOS et apte à établir et interrompre une circulation d'un courant entre le second transistor de type MOS et une sortie sur laquelle le courant délivré par les moyens de conversion est destiné à être envoyé.

L'invention concerne également un imageur électronique comportant une matrice de pixels, chaque pixel comportant au moins un détecteur thermique résistif, et comprenant en outre une pluralité de circuits électroniques de polarisation et de lecture d'au moins un détecteur thermique résistif tels que définis précédemment.

Chaque circuit électronique de polarisation et de lecture peut être associé à un seul pixel comportant un détecteur thermique résistif destiné à être polarisé et lu par ledit circuit électronique de polarisation et de lecture, les moyens de polarisation et les moyens de conversion dudit circuit électronique de polarisation et de lecture pouvant être disposés dans ledit pixel.

Dans une variante, chaque circuit électronique de polarisation et de lecture peut être associé à plusieurs pixels comportant chacun un détecteur thermique résistif destiné à être polarisé et lu par ledit circuit électronique de polarisation et de lecture, chaque circuit électronique de polarisation et de lecture pouvant comporter plusieurs moyens de conversion, chacun desdits moyens de conversion pouvant être apte à convertir une tension aux bornes du détecteur thermique résistif d'un desdits pixels en un courant et pouvant être disposé dans ledit un desdits pixels, et dans lequel les moyens de polarisation de chaque circuit électronique de polarisation et de lecture peuvent être communs à plusieurs pixels et peuvent être aptes à polariser les détecteurs thermiques résistifs desdits pixels en faisant circuler un courant de polarisation de valeur sensiblement constante dans les détecteurs thermiques résistifs desdits pixels lors d'une variation de la résistance électrique des détecteurs thermiques résistifs desdits pixels.

Dans cette variante, les moyens de polarisation de chaque circuit électronique de polarisation et de lecture peuvent être disposés hors desdits pixels.

De plus, chacun desdits pixels peut comporter en outre au moins un interrupteur apte à établir et interrompre une circulation dudit courant de valeur sensiblement constante entre le détecteur thermique résistif dudit pixel et les moyens de polarisation dudit pixel.

Les moyens de polarisation de chaque circuit électronique de polarisation et de lecture peuvent comporter en outre au moins un détecteur thermique résistif thermalisé apte à modifier la valeur dudit courant de polarisation.

Les détecteurs thermiques résistifs peuvent être aptes à mesurer un rayonnement infrarouge.

Les détecteurs thermiques résistifs peuvent être des bolomètres.

Enfin, l'invention concerne également un procédé de mesure d'une température par au moins un détecteur thermique résistif, comportant au moins les étapes de :

- polarisation du détecteur thermique résistif en faisant circuler un courant de polarisation de valeur sensiblement constante dans le détecteur thermique résistif lors d'une variation de la résistance électrique du détecteur thermique résistif ;
- lecture d'une tension aux bornes du détecteur thermique résistif exposé à la température à mesurer ;

- conversion de la tension lue aux bornes du détecteur thermique résistif en un courant correspondant à la mesure de température.

L'étape de conversion peut être réalisée par un transistor de type MOS dont la grille est reliée électriquement à l'une des bornes du détecteur thermique résistif. Une tension d'ébasage peut être appliquée sur la source du transistor MOS.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels .

- la figure 1 représente l'architecture d'un pixel d'une matrice d'un imageur infrarouge à bolomètres et d'un circuit de lecture associé selon l'art antérieur,
- la figure 2 représente un circuit électronique de polarisation et de lecture d'un détecteur thermique résistif d'un pixel d'un imageur, selon un premier mode de réalisation de l'invention,
- la figure 3 représente graphiquement la conversion d'une variation de tension aux bornes d'un détecteur thermique résistif en une variation de courant par le circuit électronique de polarisation et de lecture d'un détecteur thermique résistif selon l'invention,
- la figure 4 représente graphiquement les différentes opérations de conversion réalisées au sein d'un pixel comportant un circuit électronique de polarisation et de lecture d'un détecteur thermique résistif selon l'invention,
- la figure 5 représente un circuit électronique de polarisation et de lecture d'un détecteur thermique résistif d'un pixel d'un imageur selon une variante du premier mode de réalisation de l'invention,
- la figure 6 représente un circuit électronique de polarisation et de lecture d'un détecteur thermique résistif d'un pixel d'un imageur selon un second mode de réalisation de l'invention,
- les figures 7 à 9 représentent un circuit électronique de polarisation et de lecture d'un détecteur thermique résistif d'un pixel d'un imageur, selon différentes variantes du second mode de réalisation de l'invention,
- la figure 10 représente un imageur comportant une matrice de pixels et des circuits électroniques de polarisation et de lecture de détecteurs thermiques résistifs selon l'invention.

Des parties identiques, similaires ou équivalentes des différentes figures décrites ci-après portent les mêmes références numériques de façon à faciliter le passage d'une figure à l'autre.
Les différentes parties représentées sur les figures ne le sont pas nécessairement selon une échelle uniforme, pour rendre les figures plus lisibles.
Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

Les différents exemples de réalisation décrits par la suite comportent des détecteurs thermiques résistifs de type bolomètre. Toutefois, ces exemples peuvent également s'appliquer pour n'importe quel type de détecteur thermique résistif autre qu'un bolomètre, par exemple toute résistance variable avec la température.
On se réfère tout d'abord à la figure 2 qui représente un circuit électronique 100 de polarisation et de lecture d'un bolomètre 102 d'un pixel 101 d'un imageur infrarouge, selon un premier mode de réalisation.
Les éléments du circuit électronique 100 sont ici tous réalisés au sein du pixel 101 comportant le bolomètre 102 que le circuit électrique 100 est destiné à polariser et à lire. Le bolomètre 102 comporte une première borne sur laquelle est appliquée une tension Vdt et une seconde borne reliée électriquement au drain d'un premier transistor MOS 104, ici de type PMOS, faisant partie du circuit électronique 100. Une tension d'alimentation Vdd est appliquée sur la source du premier transistor MOS 104.
Le circuit électronique 100 comporte en outre un second transistor MOS 106 de type opposé à celui du premier transistor 104, c'est-à-dire ici de type NMOS. Une tension Veb est appliquée sur la source du second transistor MOS 106. La grille du second transistor MOS 106 est reliée électriquement au drain du premier transistor MOS 104. Enfin, le drain du second transistor MOS 106 est relié électriquement à un bus 110 par l'intermédiaire d'un interrupteur 108.
La matrice de l'imageur infrarouge comporte d'autres pixels non représentés et similaires au pixel 101, c'est-à-dire comportant un bolomètre similaire au bolomètre 102 et un circuit électronique de polarisation et de lecture similaire au circuit électronique 100. Les pixels disposés sur la même colonne que le pixel 101 sont également reliés électriquement au bus 110 afin que l'ensemble des signaux de mesure délivrés par les pixels de cette colonne soient délivrés à un circuit de traitement 112 par l'intermédiaire du bus 110.

Le premier transistor MOS 104 forme des moyens de polarisation en courant du bolomètre 102 qui est alors traversé par un courant moyen Io de polarisation de valeur sensiblement constante. Une fluctuation de température de la scène se traduit par une variation de la résistance Ro du bolomètre 102 et donc par une variation de la tension Vo aux bornes du bolomètre 102.

La lecture de la tension Vbolo (avec Vbolo = Vo + Vdt), correspondant au potentiel au point d'intersection entre le bolomètre 102 et le drain du premier transistor MOS 104, se fait sur la grille du second transistor MOS 106. Cette tension Vbolo est ensuite convertie en un courant Imesure par la transconductance du second transistor MOS 106. L'interrupteur 108 est destiné à être commuté en position fermée lors de la lecture du courant de mesure, c'est-à-dire lorsque l'on souhaite relever le signal mesuré par le pixel 101.

La tension Veb appliquée sur la source du second transistor MOS 106 est contrôlée et fixée de manière à mettre le second transistor MOS 106 en limite de saturation. En effet, le régime de saturation du second transistor MOS 106 lui permet d'accepter des variations de courant tout en conservant sa tension de drain flottante (le drain de ce MOS est connecté, lors de l'acquisition de la mesure du capteur et par l'intermédiaire de l'interrupteur 108 alors fermé, au circuit 112 de traitement du courant de mesure délivré par le pixel 101, et par exemple à une entrée négative d'un amplificateur monté en intégrateur faisant partie du circuit 112 de traitement du courant; c'est cet amplificateur qui fixe la tension sur son entrée négative). Cependant, on cherche à ce que le second transistor MOS 106 soit en saturation tout en ne fournissant qu'un courant le plus faible possible dans le but d'obtenir un mode commun très petit et ne conserver ainsi que les faibles fluctuations du courant qui correspondent aux fluctuations de la température de scène mesurées. C'est la raison pour laquelle la tension Veb est contrôlée et fixée de manière à mettre le second transistor MOS 106 en limite de saturation.

Le courant de mesure $I_{mesure}$, représentant des variations de températures mesurées par le bolomètre 102 et correspondant au courant Ids du second transistor MOS 106, est donc tel que:

$$\mathrm{Im}\,esure = \frac{\mu Cox}{2} \cdot \frac{W}{L}\left(Vgs - Vt\right)^2 \qquad (1)$$

avec:

Cox: capacité de l'oxyde de grille par unité de surface du seconde transistor MOS 106 ;
W : largeur du canal du second transistor MOS 106 ;
μ : mobilité des porteurs du second transistor MOS 106;
L : longueur du canal du second transistor MOS 106 ;
Vgs : tension grille-source du second transistor MOS 106 ;
Vt : tension de seuil du second transistor MOS 106.
Or, Vgs = Vbolo - Veb.

De plus, Vbolo = Io x Ro.

On a donc:

$$\mathrm{Im}\,esure = \frac{\mu Cox}{2} \cdot \frac{W}{L}\left(Io.Ro - Veb - Vt\right)^2 \qquad (2)$$

Ainsi, lorsque le bolomètre 102 est soumis aux variations de température de scène, cela engendre une variation de sa résistance électrique Ro, ce qui se traduit par une variation du courant de mesure Imesure.

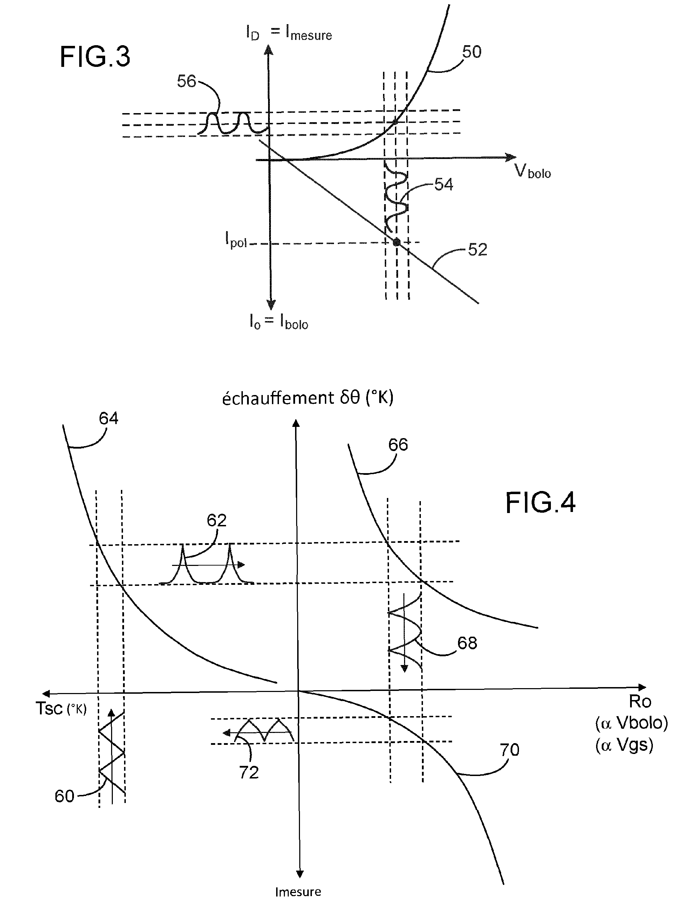

La courbe 50 représentée sur la figure 3 correspond à la relation entre la valeur du courant Imesure en fonction de la valeur de Vbolo, c'est-à-dire représente graphiquement l'équation (2). La courbe 52 représente la relation entre la valeur du courant de polarisation Io=Ibolo en fonction de la valeur de Vbolo, obtenue par la loi d'Ohm. Pour un point de fonctionnement du second transistor MOS 106, comme représenté sur la figure 3, une mesure d'une variation de température par le bolomètre 102 se traduit alors par une variation 54 de la tension Vbolo autour du point de fonctionnement. Cette variation 54 est alors convertie par le second transistor MOS 106 en une variation 56 du courant Imesure. Le lien entre la tension Vbolo et le courant de mesure Imesure n'est pas linéaire mais quadratique (équation (2)).

On peut également interpréter cette relation par le passage de Vbolo à Imesure via la transconductance

$$gm = \frac{\delta \, \mathrm{Im}\, esure}{\delta Vgs} = \frac{\delta \, \mathrm{Im}\, esure}{\delta Vbolo}$$ du second transistor MOS 106. Dans ce cas, l'équation (2) peut également s'écrire :

$$\mathrm{Im}\, esure = \frac{gm}{2} . \left(Vbolo - Veb - Vt\right)$$

Par rapport au pixel 10 de l'art antérieur précédemment décrit, la relation entre l'évolution du courant de mesure et la température de scène est inversée. En effet, dans le pixel 101, lorsque la température de scène augmente, la résistance bolométrique Ro diminue ce qui entraine la diminution de la tension Vbolo (la polarisation en courant du bolomètre 102 par le premier transistor MOS 104 fournit un courant Io constant), qui elle-même implique une réduction du courant Imesure via le second transistor MOS 106, et inversement lorsque la température de scène diminue. Ainsi, sauf si on insère volontairement une inversion, les zones froides sont représentées par des niveaux de gris clair et les zones chaudes par des niveaux de gris sombre dans l'image obtenue par l'imageur infrarouge comportant une matrice de pixels similaires au pixel 101.

De plus, contrairement à l'ancienne architecture du pixel 10, la structure du circuit électronique 100 de polarisation et de lecture du bolomètre 102 atténue la non-linéarité de la relation entre l'échauffement θ du bolomètre 102 et la température de scène Tsc.

La figure 4 représente graphiquement les différentes opérations de conversion réalisées au sein du pixel 101, depuis le flux infrarouge capté par le bolomètre 102 jusqu'au courant de mesure Imesure obtenu en sortie du circuit électronique 100.

Les variations de la température de la scène Tsc à mesurer sont représentées par la courbe 60. Etant donné que la scène peut être assimilée à un corps noir, le flux infrarouge 62 correspondant à cette variation de température 60 est obtenu par la courbe 64 représentant la relation entre la valeur de l'échauffement δθ et la température Tsc pour un tel corps noir, cette courbe étant exponentielle en Tsc. On voit sur la figure 4 que cette relation 64 entre la valeur de l'échauffement δθ et la température Tsc donne une courbure concave au signal de variation de température 60, cette courbure se retrouvant sur le signal du flux infrarouge 62.

La courbe 66 représente la relation entre la résistance Ro du bolomètre 102 et l'échauffement δθ reçu par le bolomètre 102, donnant la valeur de la résistance Ro du bolomètre 102 en fonction du flux infrarouge reçu. Cette courbe 66 est proportionnelle à l'exponentielle de l'inverse de l'échauffement. Le bolomètre 102 se comporte thermiquement comme un absorbeur thermique, c'est-à-dire comme une résistance thermique à coefficient négatif. La variation de Ro obtenue correspondant au flux infrarouge 62 est représentée par la courbe 68. On voit sur la figure 4 que la relation 66 entre la résistance Ro du bolomètre 102 et l'échauffement δθ reçu par le bolomètre 102 donne une courbure convexe au signal de variation du flux infrarouge 62, atténuant la courbure concave donnée par la relation 64 entre la valeur de l'échauffement δθ et la température Tsc.

La variation de Ro est directement proportionnelle à la variation de la tension Vbolo et donc également à la variation de la tension Vgs aux bornes du second transistor MOS 106. Ainsi, la courbe 68 représente également, à un coefficient multiplicateur constant près, la variation de la tension Vgs entre la grille et la source du second transistor MOS 106.

En variante, les deux transistors MOS peuvent être du même type. On obtient alors une accentuation de la courbure concave donnée par la relation 64.

La courbe 70 représente la relation entre la résistance Ro du bolomètre 102 et la valeur du courant Imesure délivré par le pixel 101. Cette courbe 70 est proportionnelle au coefficient Vgs$^2$, avec Vgs correspondant à la tension grille-source du second transistor MOS 106. La variation de Imesure obtenue correspondant à la variation de Ro 68 est représentée par la courbe 72. On voit sur la figure 4 que la relation 70 entre la résistance Ro du bolomètre 102 et le courant Imesure donne une courbure convexe au signal de variation de la tension Vgs. Ainsi, la courbure du signal de variation de Imesure 72 obtenue s'approche de celle du signal initial 60 de la température de scène mesurée.

La structure du circuit électronique 100 permet de fournir au bolomètre 102 un courant moyen Io nécessaire grâce au premier transistor MOS 104. De plus, le second transistor MOS 106 utilisé pour convertir la tension du bolomètre 102 en courant est traversé par un courant Drain-Source Ids assez faible pour atténuer son bruit mais assez grand pour contenir les fluctuations représentatives de l'information utile fournie par le bolomètre 102.

Etant donné que la tension Veb appliquée sur la source du second transistor MOS 106 est choisie de manière à ce que le courant de mesure Imesure ne possède pas un mode commun inutile, et donc que seules les variations utiles du courant soient envoyées sur le bus 110, cette tension Veb réalisé un ébasage en tension du bolomètre 102.

Un tel circuit électronique 100 permet donc de réduire le bruit et de remplacer la structure d'ébasage 18 se trouvant en tête de colonne dans le pixel 10 de l'art antérieur.

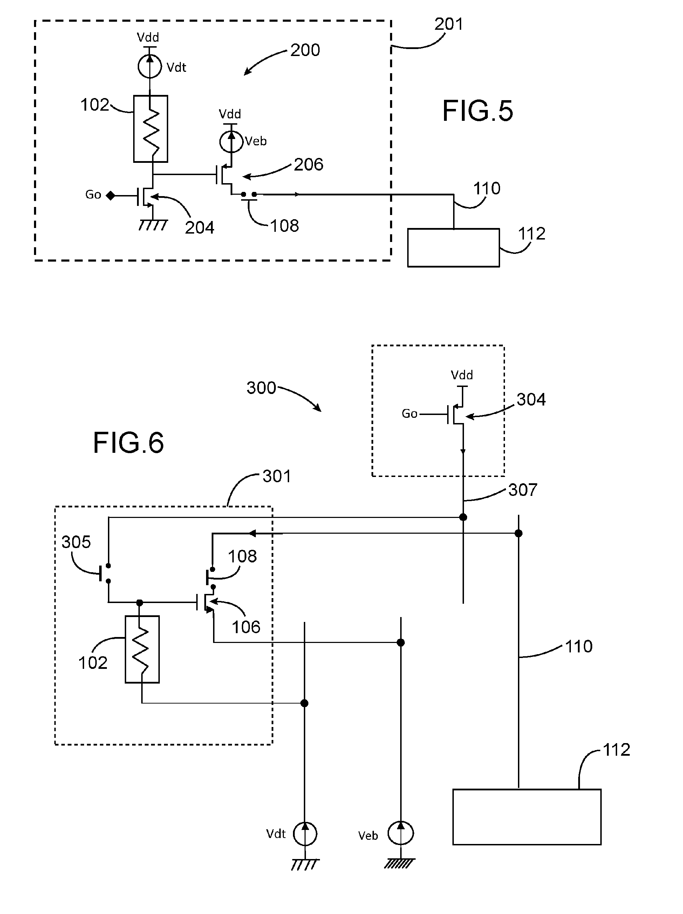

On se réfère à la figure 5 qui représente un circuit électronique 200 de polarisation et de lecture d'un bolomètre 102 d'un pixel 201 d'un imageur infrarouge selon une variante du premier mode de réalisation.

Par rapport au circuit électronique 100 précédemment décrit, la polarisation en courant du bolomètre 102 est ici assurée par un premier transistor MOS 204 de type NMOS. De plus, contrairement au circuit électronique 100 dans lequel le premier transistor MOS 104 comportait sa source reliée électriquement à la tension d'alimentation Vdd et son drain relié électriquement à une borne du bolomètre 102 (l'autre borne du bolomètre 102 étant reliée électriquement au potentiel Vdt), le premier transistor MOS 204 comporte sa source reliée électriquement à la masse et son drain relié électriquement à une borne du bolomètre 102. L'autre borne du bolomètre 102 est reliée électriquement au potentiel Vdt lui-même relié à la tension d'alimentation Vdd.

Le circuit électronique 200 comporte également un second transistor MOS 206 de type PMOS servant à convertir la tension du bolomètre 102 en courant. Comme dans le circuit électronique 100, une tension Veb est appliquée sur la source du second transistor MOS 206. Cette tension Veb est également reliée à la tension d'alimentation Vdd. Comme pour le circuit électronique 100, le drain du second transistor MOS 206 est relié électriquement à l'interrupteur 108 permettant de délivrer sur le bus 110 le courant de mesure Imesure.

Le principe de fonctionnement du circuit électronique 200 de polarisation et de lecture est similaire à celui du circuit électronique 100.

En variante des circuits électroniques 100 et 200, il est possible que les transistors MOS de polarisation et de conversion soient du même type, NMOS ou PMOS. Pour des transistors de type PMOS, un tel circuit électronique correspondrait au circuit 100 précédemment décrit, mais dans lequel le transistor NMOS 106 serait remplacé par le transistor PMOS 206, une tension Veb étant appliquée sur la source du second transistor PMOS 206, cette tension Veb étant également reliée à la tension d'alimentation Vdd comme représenté sur la figure 5. Pour des transistors de type NMOS, un tel circuit électronique correspondrait au circuit 200 précédemment décrit, mais dans lequel le transistor PMOS 206 serait remplacé par le transistor NMOS 106 comportant, comme sur la figure 2, une tension Veb appliquée sur sa source.

On décrit en liaison avec la figure 6 un autre circuit électronique 300 de polarisation et de mesure d'un bolomètre 102 d'un pixel 301 d'un imageur infrarouge selon un second mode de réalisation.

Contrairement aux circuits électroniques de polarisation et de lecture 100 et 200 précédemment décrits, les éléments du circuit électronique 300 ne sont pas tous disposés au sein du pixel 301. En effet, dans ce circuit électronique 300, la polarisation en courant du bolomètre 102 est assurée par un premier transistor MOS 304, ici de type PMOS, disposé en tête de colonne de la matrice de pixels. Comme dans le circuit électronique 100, la source du premier transistor MOS 304 est reliée électriquement à la tension d'alimentation Vdd. Le premier transistor MOS 304 sert ici à la polarisation en courant de tous les bolomètres des pixels se trouvant sur la même colonne que le pixel 301. Ainsi, le drain du premier transistor MOS 304 est relié électriquement à un bus 307 auquel sont également reliés électriquement chacun des bolomètres des pixels se trouvant sur la même colonne que le pixel 301 par l'intermédiaire d'un interrupteur. Sur l'exemple de la figure 5, le bolomètre 102 est relié électriquement au bus 307 par l'intermédiaire d'un interrupteur 305. Le bolomètre 102 est également relié électriquement, au niveau d'une seconde borne, à un potentiel Vdt, également commun à tous les pixels se trouvant sur la même colonne que le pixel 301.

Comme le circuit électronique 100, le circuit électronique 300 comporte le second transistor MOS 106 de type NMOS. Une tension Veb, également commune pour tous les pixels de la colonne, est appliquée sur la source du second transistor MOS 106. La grille du second transistor MOS 106 est reliée électriquement à la liaison électrique entre l'interrupteur 305 et le bolomètre 102. Enfin, le drain du second transistor MOS 106 est relié électriquement au bus 110 par l'intermédiaire de l'interrupteur 108. De manière analogue au circuit électronique 100, le second transistor MOS 106 du circuit électronique 300 permet de lire la tension Vbolo et de la convertir en un courant Imesure par sa transconductance. L'interrupteur 108 est commuté en position fermée lors de la lecture du courant de mesure Imesure.

Le fonctionnement du circuit électronique 300 (polarisation en courant du bolomètre 102 et conversion de la tension du bolomètre 102 en courant) est similaire à celui du circuit électronique 100, excepté que l'interrupteur 305 est ajouté dans le pixel afin de polariser le bon bolomètre au bon moment.

Par rapport aux circuits électroniques 100 et 200, le circuit électronique 300 selon ce second mode de réalisation a pour avantage d'avoir une structure ne nécessitant la réalisation que d'un seul transistor au sein des pixels (le second transistor MOS 106).

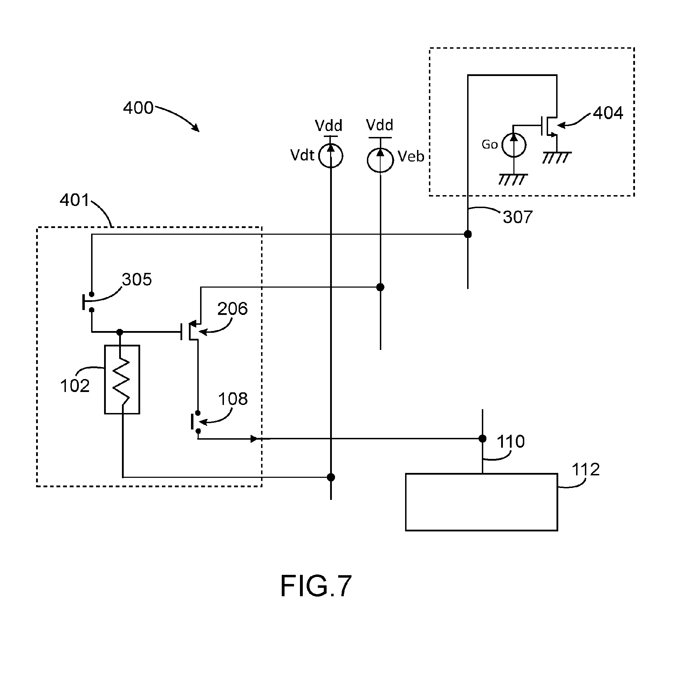

On se réfère à la figure 7 qui représente un circuit électronique 400 de polarisation et de lecture d'un bolomètre 102 d'un pixel 401 d'un imageur infrarouge selon une variante du second mode de réalisation.

Par rapport au circuit électronique 300 précédemment décrit, la polarisation en courant du bolomètre 102 est ici assurée par un premier transistor MOS 404 de type NMOS qui, comme le premier transistor MOS 304, est disposé en tête de colonne des pixels. De plus, contrairement au circuit électronique 300 dans lequel le premier transistor MOS 304 comportait sa source reliée électriquement à la tension d'alimentation Vdd et son drain relié électriquement au bolomètre 102 par l'intermédiaire de l'interrupteur 305 et du bus 307 (l'autre borne du bolomètre 102 étant reliée au potentiel Vdt), le premier transistor MOS 404 comporte sa source reliée électriquement à la masse et son drain relié électriquement au bolomètre 102 par l'intermédiaire de l'interrupteur 305 et du bus 307. L'autre borne du bolomètre 102 est reliée électriquement au potentiel Vdt lui-même relié à la tension d'alimentation Vdd.

Comme le circuit électronique 200, le circuit électronique 400 comporte le second transistor MOS 206 de type PMOS servant à convertir la tension du bolomètre 102 en courant. Comme dans le circuit électronique 200, une tension Veb est appliquée sur la source du second transistor MOS 206. Cette tension Veb est également reliée à la tension d'alimentation Vdd. Enfin, comme pour le circuit électronique 200, le drain du second transistor MOS 206 est relié électriquement à l'interrupteur 108 permettant de délivrer sur le bus 110 le courant de mesure Imesure.

Le principe de fonctionnement du circuit électronique 400 de polarisation et de lecture est similaire à celui du circuit électronique 300.

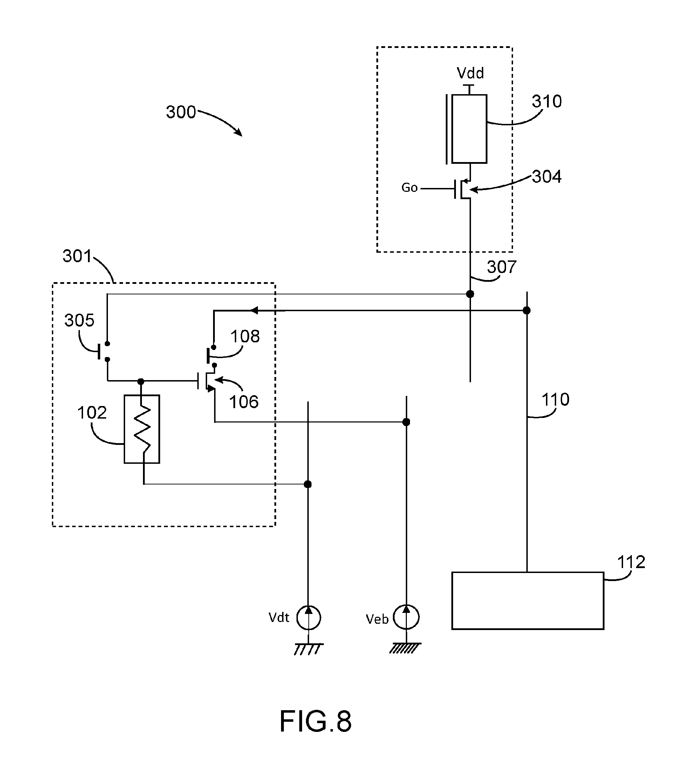

Dans une autre variante de réalisation représentée sur la figure 8, il est possible de réaliser le circuit électronique 300 de polarisation et de lecture du bolomètre 102 tel que celui-ci comporte un bolomètre thermalisé 310 interposé entre la source du premier transistor MOS 304 et la tension d'alimentation Vdd.

En effet, dans les circuits électroniques 100 à 400 précédemment décrits, les moyens de polarisation du bolomètre 102 comportent uniquement une source de courant, ce qui revient à dire que la tension moyenne de grille du second transistor MOS 106 ou 206 réalisant la conversion tension/courant est toujours constante. Etant donné que la tension d'ébasage Veb est elle aussi constante, on aura une tension moyenne Vgs constante et donc un courant moyen de mesure Imesure lui aussi constant. Cela implique que l'ébasage en tension est fixe et ne tient pas compte de la température de fonctionnement. Lorsque la température augmente, le bolomètre 102 subit un échauffement et la valeur moyenne de sa résistance diminue, ce qui fait augmenter le mode commun du courant le traversant.

Ainsi, pour s'adapter à ce phénomène d'échauffement, il est possible d'utiliser un bolomètre thermalisé 310 comme représenté sur la figure 8. Ce bolomètre 310 est couplé aux moyens de polarisation en courant du circuit électronique 300. Ainsi, le courant moyen de polarisation du bolomètre 102 suit l'échauffement en température de celui-ci. Par conséquent la tension Vgs du second transistor MOS 106 de conversion, et donc le courant moyen de mesure Imesure délivré, suivent eux aussi cet échauffement.

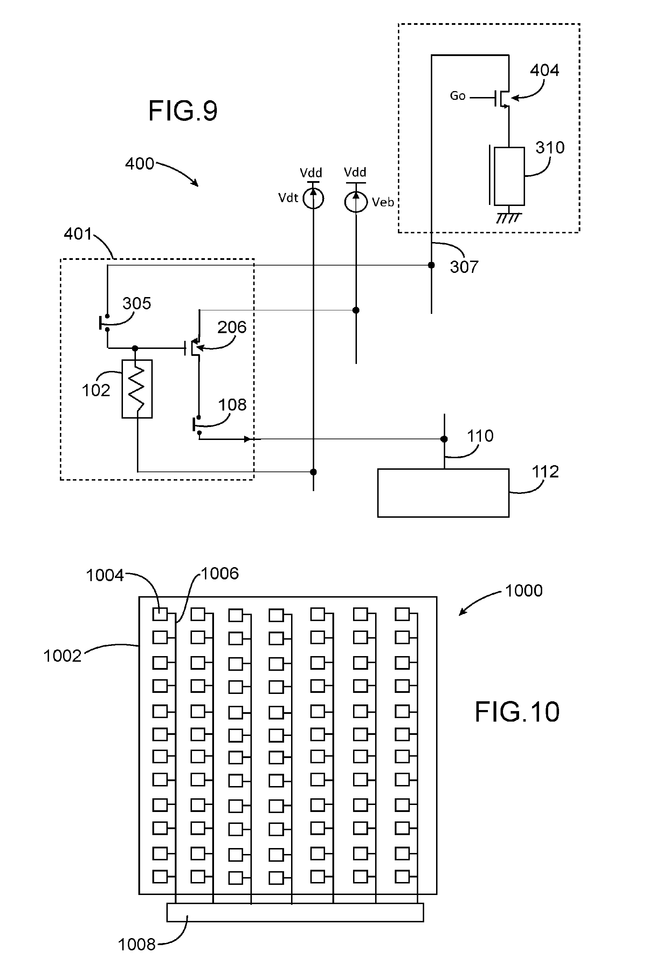

Un tel bolomètre thermalisé 310 peut également être ajouté au circuit électronique 400 comme représenté sur la figure 9, qui est alors couplé aux moyens de polarisation en courant du circuit électronique 400, entre le premier transistor MOS 404 et la masse.

Les transistors PMOS étant généralement moins bruyants que les transistors NMOS, il est avantageux de réaliser, dans un imageur infrarouge, les circuits électroniques de polarisation et de lecture de bolomètres 200 et 400 précédemment décrits qui comportent un second transistor PMOS réalisant une conversion tension/courant de la mesure réalisée.

Un imageur 1000, par exemple une caméra infrarouge, est représenté partiellement sur la figure 10. Cet imageur 1000 comporte une matrice 1002 de pixels 1004. Chacun des pixels 1004 peut correspondre à l'un des pixels 101, 201, 301 ou 401 précédemment décrit. Chaque pixel 1004 comporte un bolomètre et un circuit électronique de polarisation et de lecture par exemple similaire au circuit 100 précédemment décrit. Les circuits électroniques de polarisation et de lecture d'une même colonne de pixels sont reliés électriquement à un circuit 1008 de traitement des signaux de mesure et permettant de reconstituée l'image capturée par les pixels 1004, par l'intermédiaire d'un bus 1006.

**Revendications**

1. Circuit électronique (100, 200, 300, 400) de polarisation et de lecture d'au moins un détecteur thermique résistif (102), comportant :

   - des moyens de polarisation aptes à polariser le détecteur thermique résistif (102) en faisant circuler un courant de polarisation de valeur sensiblement constante dans le détecteur thermique résistif (102) lors d'une variation de sa résistance électrique ;
   - des moyens de conversion aptes à convertir une tension aux bornes du détecteur thermique résistif (102) en un courant, comportant au moins un transistor de type MOS (106, 206) dont la grille est reliée électriquement à l'une des bornes du détecteur thermique résistif (102) ;
   - des moyens de génération d'une tension d'ébasage reliés électriquement à la source du transistor de type MOS (106, 206) des moyens de conversion.

2. Circuit électronique (100, 200, 300, 400) selon la revendication 1, dans lequel les moyens de polarisation comportent au moins un premier transistor de type MOS (104, 204, 304, 404) dont la source ou le drain est relié électriquement à ladite une des bornes du détecteur thermique résistif (102), le transistor de type MOS (106, 206) des moyens de conversion étant appelé second transistor.

**3.** Circuit électronique (100, 200, 300, 400) selon la revendication 2, dans lequel le premier transistor de type MOS (204, 404) est un transistor NMOS et le second transistor (206) de type MOS est un transistor PMOS, ou dans lequel le premier transistor de type MOS (104, 304) est un transistor PMOS et le second transistor de type MOS (106) est un transistor NMOS.

**4.** Circuit électronique (100, 200) selon la revendication 2, dans lequel le premier transistor de type MOS (104, 204) et le second transistor (106, 206) sont des transistors du même type, PMOS ou NMOS.

**5.** Circuit électronique (100, 200, 300, 400) selon l'une des revendications 2 à 4, comportant en outre au moins un interrupteur (108) relié électriquement au second transistor de type MOS (106, 206) et apte à établir et interrompre une circulation d'un courant entre le second transistor de type MOS (106, 206) et une sortie sur laquelle le courant délivré par les moyens de conversion est destiné à être envoyé.

**6.** Imageur électronique (1000) comportant une matrice (1002) de pixels (1004, 101, 201, 301, 401), chaque pixel (1004, 101, 201, 301, 401) comportant au moins un détecteur thermique résistif (102), et comprenant en outre une pluralité de circuits électroniques (100, 200, 300, 400) de polarisation et de lecture d'au moins un détecteur thermique résistif (102) selon l'une des revendications précédentes.

**7.** Imageur électronique (1000) selon la revendication 6, dans lequel chaque circuit électronique (100, 200) de polarisation et de lecture est associé à un seul pixel (1004, 101, 201) comportant un détecteur thermique résistif (102) destiné à être polarisé et lu par ledit circuit électronique (100, 200) de polarisation et de lecture, les moyens de polarisation et les moyens de conversion dudit circuit électronique de polarisation et de lecture (100, 200) étant disposés dans ledit pixel (1004, 101, 201).

**8.** Imageur électronique (1000) selon la revendication 6, dans lequel chaque circuit électronique (300, 400) de polarisation et de lecture est associé à plusieurs pixels (1004, 301, 401) comportant chacun un détecteur thermique résistif (102) destiné à être polarisé et lu par ledit circuit électronique (300, 400) de polarisation et de lecture, chaque circuit électronique (300, 400) de polarisation et de lecture comportant plusieurs moyens de conversion, chacun desdits moyens de conversion étant apte à convertir une tension aux bornes du détecteur thermique résistif (102) d'un desdits pixels (1004, 301, 401) en un courant et étant disposé dans ledit un desdits pixels (1004, 301, 401), et dans lequel les moyens de polarisation de chaque circuit électronique (300, 400) de polarisation et de lecture sont communs à plusieurs pixels (1004, 301, 401) et sont aptes à polariser les détecteurs thermiques résistifs (102) desdits pixels (1004, 301, 401) en faisant circuler un courant de polarisation de valeur sensiblement constante dans les détecteurs thermiques résistifs (102) desdits pixels (1004, 301, 401) lors d'une variation de la résistance électrique des détecteurs thermiques résistifs (102) desdits pixels (1004, 301, 401).

**9.** Imageur électronique (1000) selon la revendication 8, dans lequel les moyens de polarisation de chaque circuit électronique (300, 400) de polarisation et de lecture sont disposés hors desdits pixels (1004, 301, 401).

**10.** Imageur électronique (1000) selon l'une des revendications 8 ou 9, dans lequel chacun desdits pixels (1004, 301, 401) comporte en outre au moins un interrupteur (305) apte à établir et interrompre une circulation dudit courant de valeur sensiblement constante entre le détecteur thermique résistif (102) dudit pixel (1004, 301, 401) et les moyens de polarisation dudit pixel (1004, 301, 401).

**11.** Imageur électronique (1000) selon l'une des revendications 7 à 10, dans lequel les moyens de polarisation de chaque circuit électronique (300, 400) de polarisation et de lecture comportent en outre au moins un détecteur thermique résistif thermalisé (310) apte à modifier la valeur dudit courant de polarisation.

**12.** Imageur électronique (1000) selon l'une des revendications 6 à 11, dans lequel les détecteurs thermiques résistifs (102) sont aptes à mesurer un rayonnement infrarouge.

**13.** Imageur électronique (1000) selon l'une des revendications 6 à 12, dans les détecteurs thermiques résistifs (102) sont des bolomètres.

**14.** Procédé de mesure d'une température par au moins un détecteur thermique résistif (102), comportant au moins les étapes de :

- polarisation du détecteur thermique résistif (102) en faisant circuler un courant de polarisation de valeur sensiblement constante dans le détecteur thermique résistif (102) lors d'une variation de la résistance électrique du détecteur thermique résistif (102) ;

- lecture d'une tension aux bornes du détecteur thermique résistif (102) exposé à la température à mesurer ;

- conversion de la tension lue aux bornes du détecteur thermique résistif (102) par un transistor de type MOS (106, 206) dont la grille est reliée électriquement à l'une des bornes du détecteur thermique résistif (102), en un courant correspondant à la mesure de température, une tension d'ébasage étant appliquée sur la source du transistor de type MOS (106, 206) .

FIG.1

FIG.2

**FIG.3**

$I_D = I_{mesure}$

56

50

$V_{bolo}$

54

$I_{pol}$

52

$I_o = I_{bolo}$

échauffement $\delta\theta$ (°K)

64

66

62

**FIG.4**

68

Tsc (°K)

60

72

70

$R_o$
($\alpha$ Vbolo)
($\alpha$ Vgs)

Imesure

FIG.5

FIG.6

400

Vdd    Vdd

Vdt    Veb

Go    404

307

401

305

206

102

108

110

112

FIG.7

FIG.8

FIG.9

FIG.10

Europäisches
Patentamt

European
Patent Office

Office européen
des brevets

## RAPPORT DE RECHERCHE EUROPEENNE

Numéro de la demande

EP 11 18 9909

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 811 808 A (CANNATA ROBERT F [US] ET AL) 22 septembre 1998 (1998-09-22)<br>* abrégé; figures 1, 3A, 9 *<br>* colonne 11, ligne 20 - colonne 12, ligne 50 *<br>* colonne 16, ligne 29-45 *<br>----- | 1-14 | INV.<br>G01J5/20<br>G01J5/22 |
| A | EP 1 431 731 A1 (FR DE DETECTEURS SOC [FR] FR DE DETECTEURS INFRAROUGES S [FR]) 23 juin 2004 (2004-06-23)<br>* abrégé *<br>* alinéas [0007], [0008] *<br>----- | 1-14 | |

DOMAINES TECHNIQUES
RECHERCHES (IPC)

G01J

Le présent rapport a été établi pour toutes les revendications

| Lieu de la recherche | Date d'achèvement de la recherche | Examinateur |
|---|---|---|
| Munich | 27 février 2012 | Varelas, Dimitrios |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 18 9909

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-02-2012

| Document brevet cité au rapport de recherche | | Date de publication | Membre(s) de la famille de brevet(s) | | Date de publication |
|---|---|---|---|---|---|
| US 5811808 | A | 22-09-1998 | US | RE40249 E1 | 22-04-2008 |
| | | | US | 5811808 A | 22-09-1998 |
| EP 1431731 | A1 | 23-06-2004 | CA | 2452627 A1 | 16-06-2004 |
| | | | DE | 60304310 T2 | 24-08-2006 |
| | | | EP | 1431731 A1 | 23-06-2004 |
| | | | FR | 2848666 A1 | 18-06-2004 |
| | | | US | 2004113082 A1 | 17-06-2004 |

EPO FORM P0460

Pour tout renseignement concernant cette annexe : voir Journal Officiel de l'Office européen des brevets, No.12/82